# EUROPÄISCHE PATENTSCHRIFT

(11) **EP 0 641 732 B1**
(45) Veröffentlichungstag und Bekanntmachung des Hinweises auf die Patenterteilung: **11.02.1998**
(21) Anmeldenummer: 94112248.3
(22) Anmeldetag: 05.08.1994
(51) Int. Cl.: B65G 69/00

(54) **Dichtung des Spaltes zwischen dem Rand einer Gebäudeöffnung und dem Heck eines andockenden Fahrzeuges**
Sealing of the gap between the edge of an aperture in a building and the rear of a vehicle
Joint pour couvrir la fente entre le bord d'une ouverture d'un bâtiment et l'arrière d'un véhicule

(30) Priorität: 01.09.1993 DE 9313143 U
(43) Veröffentlichungstag der Anmeldung: 08.03.1995
(73) Patentinhaber: Alten, Kurt, D-30974 Wennigsen (DE)
(72) Erfinder: Alten, Kurt, D-30974 Wennigsen (DE)
(74) Vertreter: Depmeyer, Lothar

(56) Entgegenhaltungen:
- DE-C- 4 210 298
- DE-U- 9 106 539
- US-A- 3 915 183

## Beschreibung

Die Erfindung betrifft eine verformbare Dichtung des Spaltes zwischen dem Rand einer Gebäudeöffnung und dem Heck eines andockenden Fahrzeuges nach dem Gattungsbegriff des ersten Patentanspruches.

Bei einer bekannten Dichtung dieser Art (DE-C 4 210 298) sind die dem Gebäude abgekehrten, vorderen Ränder der frei herabhängenden Überhänge fest mit den seitlich außen gelegenen Rändern des Querteils verbunden.

Der Erfindung liegt die Aufgabe zugrunde, die Montagearbeiten bei der eingangs genannten Dichtung zu vereinfachen.

Diese Aufgabe wird durch die kennzeichnenden Merkmale des Patentanspruches 1 gelöst.

Die Lösbarkeit der Verbindung ist von besonderer Bedeutung, damit die Verbindung erst nach vollzogener Montage des Dachteils hergestellt werden kann. Dadurch ergibt sich eine wesentliche Vereinfachung bei den Montagearbeiten. Eine solche Verbindung zwischen dem Querteil und den seitlichen Überhängen hat zudem den Vorteil, daß die Überhänge durch Windeinfluß nicht in den Spalt zwischen Tragkörper und Dachplane getrieben werden können. Auch können sie Bewegungen seitlich nach außen nicht vollführen und dabei ihre Dichtungsfunktion gefährden.

Vorzugsweise wird die lösbare Verbindung durch Laschen herbeigeführt, indem das eine der beiden Elemente eine oder ggfs. weitere fest angeordnet Laschen bekommt, die das andere Element hinterfassen, um dort bekannte Verbindungselemente z.B. Druckknöpfe anzuordnen, die eine ausreichend feste Verbindung herstellen können, nachdem die Montage vollzogen ist. Drüber hinaus sind aber auch Hakenverbindungen, Reißverschlüsse od. dgl. möglich.

Weitere Einzelheiten der Erfindung werden anhand der Zeichnung erläutert, in der ein Ausführungsbeispiel der Erfindung dargestellt ist.

Es zeigen:

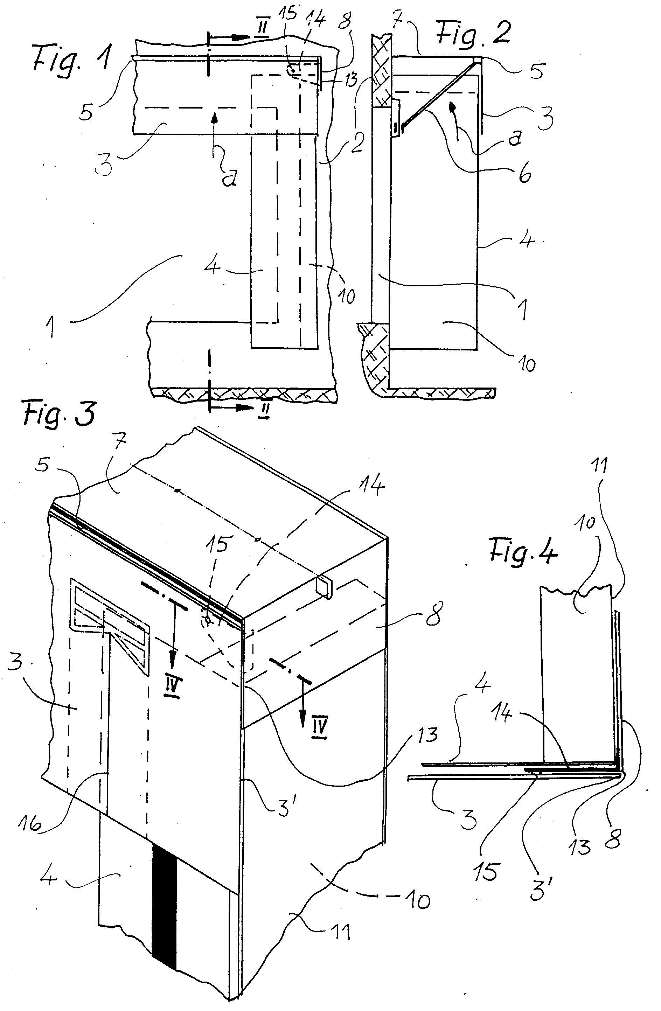

Fig. 1 die rechte Hälfte einer Dichtung der eingangs erwähnten Art in der Ansicht,
Fig. 2 einen Schnitt nach der Linie II - II von Fig. 1,
Fig. 3 die rechte, obere Ecke einer verformbaren Dichtung in schaubildlicher Darstellung, und zwar von rechts oben schräg nach unten gesehen und
Fig. 4 einen Teilschnitt nach der Linie IV -IV von Fig. 3.

Vor einer Gebäudeöffnung 1 eines Gebäudes mit der Wandung 2 befindet sich die erfindungsgemässe verformbare Dichtung, sie soll den Spalt zwischen einem andockenden Fahrzeug und dem Rand der Gebäudeöffnung abdichten. Dazu dient eine verformbare, senkrechte Schürze mit einem oben gelegenen Querteil 3 und einem zu beiden Seiten der Gebäudeöffnung 1 befindlichen Streifen 4. Die Schürze soll sich der Gestalt des Fahrzeuges anpassen können; sie besteht aus diesem Grunde aus folienartigem, reissfestem Material z.B. gummiertem Gewebe.

Das Querteil 3 ist gardinenartig oben an einem Querträger 5 aufgehängt, von dem aus sich eine Dachplane 7 nach hinten zum Gebäude hin erstreckt. Der Querträger 5 wird von einem Lenker 6 getragen, der im Sinne des Pfeiles a nach oben verschwenkbar ist, sollte der Querträger 5 durch Beaufschlagung des Querteils 3 z.B. beim Andocken von Sattelschleppern angehoben werden müssen. Damit würden der Querträger 5, das Querteil 3 und die Dachplane 7 entsprechend angehoben.

Die an ihrem oberen Ende hinter dem Querteil 3 angeordneten Streifen 4 sind am freien Ende von Tragkörpern 1o befestigt, die von einem Block aus elastisch verformbarem Schaumstoff od. dgl. gebildet sein können, der seitlich aussen mit einer Bespannung 11 versehen ist, um den Raum zwischen dem seitlichen Rand der Streifen 4 und dem Gebäude wasser- und wetterfest abzudichten. Die Tragkörper 1o sind elastisch nachgiebig und verformbar, wenn sie beim Andocken beaufschlagt werden sollten. Die Schaumstoffblöcke können auch durch andere Tragelemente ersetzt sein.

Um den Spalt zwischen der anhebbaren Dachplane 7 und dem oberen Ende der Tragkörper 10 zu überdecken, ist die Dachplane 7 zu beiden Seiten bzw. Enden mit einem lappigen Überhang 8 versehen, der frei herabhängt.

Damit die beiden seitlich aussen befindlichen Überhänge 8 unter Windeinwirkung nicht abheben bzw. nicht zur Seite hin oder in den Spalt klappen, sind ihre vorne gelegenen Ränder 13 mit den seitlich aussen gelegenen Rändern 3' des Querteils 3 verbunden. Diese Verbindung ist jedoch nicht unlösbar, sondern lösbar, um so bei der Montage des gesamten Dachteils der Dichtung einfacher vorgehen zu können. Nach der Montage wird dann die wetterfeste, praktisch auch wasserfeste Verbindung hergestellt.

Damit eine solche lösbare Verbindung zustandekommen kann, ist der Überhang 8 am Rand 13 mit einer aus Gewebe od. dgl. bestehenden verformbaren Lasche 14 versehen, die an der Rückseite des Querteils 3 anliegt und an ihrem freien Ende über einen Druckknopf 15 mit dem Querteil 3 verknöpft ist.

Die Lasche 14 kann sich auch über die gesamte Höhe des Überhangs 8 erstrecken und dementsprechend auch mit weiteren Druckknöpfen 15 versehen sein.

Ebenso ist es möglich, das Querteil 3 mit entsprechenden Laschen 14 auszustatten und dementsprechend die lösbare Verbindung durch Druckknopf od. dgl. am Überhang 8 herbeizuführen. Auch können die Druckknopfverbindungen durch kleine Hakenverbindungen ersetzt werden. Schliesslich können auch die Ränder 13 und 3' durch einen Reissverschluss lösbar verbunden werden.

Um die Verbindung an den Rändern 13 und 3' bei einer Verformung des Querteils 3 nicht besonders zu gefährden, kann das Querteil 3 im Randbereich mit senkrechten, randoffenen Schlitzen 16 versehen sein.

## Patentansprüche

1. Verformbare Dichtung des Spaltes zwischen dem Rand einer Gebäudeöffnung (1) und dem Heck eines andockenden Fahrzeuges mit einer lappigen, verformbaren Schürze aus zwei zu beiden Seiten der Gebäudeöffnung (1) angeordneten senkrechten Streifen (4) und einem im oberen Streifenbereich vor den Streifen (4) befindlichen Querteil (3), das an einem Querträger (5) aufgehängt ist, von dem aus sich eine Dachplane (7) zum Gebäude hin erstreckt, wobei die beiden senkrechten Streifen (4) vorne an einem Tragkörper (10) mit seitlicher Bespannung (11) als Verbindung von den seitlichen Rändern der Streifen (4) zum Gebäude befestigt sind, der Tragkörper (10) unabhängig von der Dachplane (7) und dem Querteil (3) elastisch nachgiebig in Richtung auf das Gebäude verformbar ist und wobei weiterhin die Dachplane (7) an beiden Enden mit einem frei herabhängenden Überhang (8) versehen ist, der das obere Ende des Tragkörpers (10) bzw. der Bespannung (11) überdeckt, dadurch gekennzeichnet, daß die dem Gebäude abgekehrten vorderen Ränder (13) der Überhänge (8) lösbar, jedoch wetterfest mit den seitlichen Rändern (3') des Querteils (3) verbunden sind, wobei die Ränder (3', 13) mit einem oder mehreren, verformbaren, z.B. aus Folie oder Gewebe bestehenden Laschen (14) versehen sind, die senkrecht abstehend an dem zu verbindenden Teil (3, 8) lösbar anliegen.

2. Dichtung nach Anspruch 1, dadurch gekennzeichnet, dass die Laschen (14) an der Innenseite des zu verbindenden Teils (3,8) anliegen.

3. Dichtung nach Anspruch 1, dadurch gekennzeichnet, dass sich die Verbindungsmittel (15) im Laschenendbereich befinden.

4. Dichtung nach Anspruch 1, dadurch gekennzeichnet, dass das Querteil (3) an seinen Enden mit einer oder mehreren, nach unten hin randoffenen Schlitzen (16) versehen ist.

## Claims

1. Deformable seal for sealing the gap between the edge of a building opening (1) and the rear of a vehicle being positioned thereat, having a soft, deformable apron formed from two vertical strips (4), which are disposed on both sides of the building opening (1), and a transverse member (3), which is situated in the upper strip region in front of the strips (4) and is mounted on a cross-piece member (5), from which a top cover (7) extends towards the building, the two vertical strips (4) being secured at their front end on a supporting body (10) with a lateral covering (11) serving as the connection between the lateral edges of the strips (4) and the building, the supporting body (10) being elastically resiliently deformable towards the building independently of the top cover (7) and the transverse member (3) and, moreover, the top cover (7) being provided at both ends with a freely suspended overhang (8), which covers the upper end of the supporting body (10) or respectively of the covering (11), characterised in that the front edges (13) of the overhangs (8), remote from the building, are detachably, but weather-resistantly, connected to the lateral edges (3') of the transverse member (3), the edges (3', 13) being provided with one or more deformable lugs (14), which are formed from film or fabric, for example, and detachably abut against the part (3, 8) to be connected in a vertically protruding manner.

2. Seal according to claim 1, characterised in that the lugs (14) abut against the internal surface of the part (3, 8) to be connected.

3. Seal according to claim 1, characterised in that the connecting means (15) are situated in the end region of the lugs.

4. Seal according to claim 1, characterised in that the transverse member (3) is provided at its ends with one or more slots (16), which are open towards the lower edge.

## Revendications

1. Dispositif d'étanchéité déformable de l'intervalle entre le bord d'une baie (1) d'un bâtiment et l'arrière d'un véhicule y accostant, comportant une jupe déformable du type languette, comprenant deux bandes verticales (4) disposées des deux côtés de la baie (1) du bâtiment, et une partie transversale (3) qui est placée devant les bandes (4), dans la région supérieure desdites bandes, et est suspendue à un support transversal (5) à partir duquel une bâche de recouvrement (7) s'étend en direction du bâtiment, les deux bandes verticales (4) étant fixées, à l'avant, à un corps de support (10) pourvu d'un revêtement latéral (11) et remplissant la fonction d'une liaison entre le bâtiment et les bords latéraux des bandes (4), le corps de support (10) pouvant céder élastiquement en direction du bâtiment, indépendamment de la bâche de recouvrement (7) et de la partie transversale (3), et la bâche de recouvrement (7) étant par ailleurs munie, aux deux extrémités, d'une zone débordante (8) pendant librement et recouvrant l'extrémité supérieure respective du corps de support (10) ou du revêtement (11), caractérisé par le fait que les bords antérieurs (13) des zones débordantes (8), tournés à l'opposé du bâtiment, sont reliés aux bords latéraux (3') de la partie transversale (3) de manière amovible, mais résistant néanmoins aux intempéries, les bords (3', 13) étant dotés d'une ou plusieurs patte(s) déformable(s) (14) constituée(s), par exemple, d'une feuille ou d'un tissu et appliquée(s) de manière amovible, avec saillie verticale, contre la pièce (3, 8) devant être reliée.

2. Dispositif d'étanchéité selon la revendication 1, caractérisé par le fait que les pattes (14) sont appliquées contre la face intérieure de la pièce (3, 8) devant être reliée.

3. Dispositif d'étanchéité selon la revendication 1, caractérisé par le fait que les moyens de liaison (15) se trouvent dans la région extrême des pattes.

4. Dispositif d'étanchéité selon la revendication 1, caractérisé par le fait que la partie transversale (3) est pourvue, à ses extrémités, d'une ou plusieurs fente(s) (16) à bord(s) ouvert(s) vers le bas.
